# EUROPEAN PATENT SPECIFICATION

(11) **EP 0 644 091 B1**
(45) Date of publication and mention of the grant of the patent: **07.01.1998**
(21) Application number: 94305629.1
(22) Date of filing: 29.07.1994
(51) Int. Cl.: B60R 25/02

(54) **Steering column lock**
Blockierungssystem für eine Lenksäule
Système de blocage pour une colonne de direction

(30) Priority: 21.09.1993 GB 9319460
(43) Date of publication of application: 22.03.1995
(73) Proprietor: Valeo Security Systems Limited, Birmingham B32 3DB (GB)
(72) Inventor: Jones, David William, Brierley Hill, West Midlands DY5 3HD (GB)
(74) Representative: Irons, Mark David

(56) References cited:
- DE-U- 8 330 933
- FR-A- 2 142 995
- FR-A- 2 161 392
- GB-A- 2 227 800
- US-A- 3 185 275

## Description

The present invention relates to a steering column lock, in particular for application to a motor vehicle.

Conventionally, a steering column lock includes a locking mechanism in which a locking bolt is spring-biased towards a steering shaft on removal of an operating key for the vehicle. One or more slots or detents are formed in the shaft or in a collar fixed around the shaft so that rotation of the locking shaft allows the locking bolt to snap into a slot or detent on appropriate alignment. Thereafter, the steering shaft and steering wheel cannot be rotated, making the vehicle unsteerable, and helping to prevent theft of the vehicle.

A problem with this lock is that it is possible to break the lock through application of a destructively high torque through the steering wheel, such as can be applied if an implement which allows excessive leverage to be exerted on the steering wheel is employed. Such abuse generally causes failure of the body of the locking mechanism or the locking bolt, or the slot in the steering shaft. Present regulations require such devices to be able to withstand application of a torque of at least 200 Nm before failure of the lock. However, this represents a torque which can be relatively easily applied by a suitably equipped car thief.

FR-A-2161392 discloses a steering column lock having the features of the preamble of claim 1.

The present invention seeks to provide a steering column lock which cannot be destroyed by application of a high torque through the steering wheel.

According to the present invention there is provided a steering column lock, comprising: a steering shaft having a collar portion; a sleeve disposed about said shaft and arranged to be engageable with said shaft for rotation therewith through drive means; a latch device movable between a locked position in which said sleeve is engaged so as to be prevented from being rotated with said shaft, and an unlocked position in which said sleeve is not so engaged; wherein said drive means comprise intermeshing camming surfaces formed on said sleeve and on said shaft, and resilient means to urge said intermeshing camming surfaces into engagement with each other, whereby, when said latch device is in the locked position, on application of a torque exceeding a predetermined value said intermeshing camming surfaces cam over each other against the force of said resilient means; characterized in that said intermeshing camming surfaces comprise a plurality of balls or radially disposed cylindrical rollers seated in respective seats, each formed in part at an end surface of said sleeve and in a surface of said collar portion which faces said end surface of said sleeve.

This ensures that when the latch device is in the locked position, the shaft which is meshed therewith is prevented from rotating on application of a torque below the predetermined value. On application of a torque exceeding the predetermined value, the drive means disengage, thereby preventing the application of a destructively high torque through the shaft. This arrangement of interengaged surfaces urged into contact provides a very simple yet effective means of ensuring the disengagement on application of an excessive torque.

Preferably, the intermeshing camming surfaces provide a plurality of angularly spaced relative positions in which they are fully meshed, whereby, on application of a torque exceeding the predetermined value, said shaft jumps between the angularly spaced fully meshed positions. This means that, although the shaft can be rotated on application of a torque exceeding the predetermined value, the shaft cannot be freely rotated; the shaft (and hence the steering wheel) can thereby not be held in an intermediate position but will jump between angularly spaced fully meshed positions ensuring that a vehicle to which the lock is fitted cannot be steered.

In one embodiment said sleeve is formed with one or more slots therein, and said latch device includes a locking bolt extendable in the locking position into a slot, and retracted from said slot in the unlocked position.

In a particular embodiment the resilient means and intermeshed camming surfaces are arranged, having regard to the spring constant, axial depth of the camming surfaces and surface characteristics, so that those surfaces disengage, and cam over each other on application of a torque above about 45 Nm. This value ensures that a destructively high torque cannot be applied to the latch device, whilst effectively ensuring that only erratic movement of the shaft between the fully meshed conditions is possible.

The resilient means preferably comprises a spring disposed about the shaft, having a first end which abuts the sleeve, and the opposite end of which abuts a bearing for the shaft.

Embodiments of the invention are described, by way of example only, with reference to the following drawings in which:
Figure 1 is a longitudinal view of a steering column lock, shown in an unlocked condition;
Figure 2 is a longitudinal view of the steering column lock of Figure 1, shown in a locked condition, and where a substantial torque is being applied to the steering shaft;
Figure 3(a) is a view of a part of a steering column lock in accordance with a first embodiment of the invention;
Figure 3(b) is a part view along the section defined by A-A in Figure 3(a); and
Figure 4 is a view of a part of a steering column lock in accordance with a further embodiment of the invention.

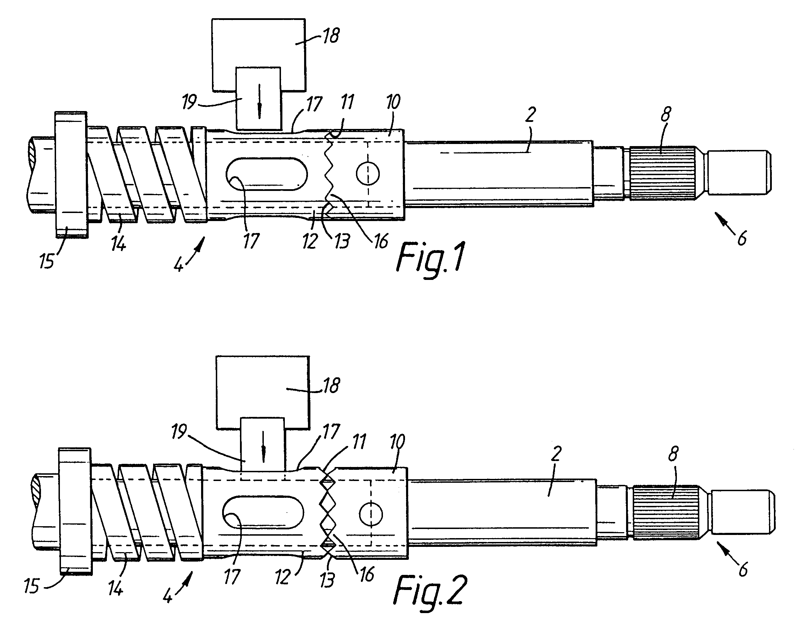

Turning to the drawings, the steering column lock is shown in Figure 1 in an unlocked condition. The steering lock comprises a locking mechanism generally designated 4 which is fitted to a steering shaft 2. When fitted in an automobile, the steering shaft 2 is supported in a conventional manner by bearings located in a tubular housing (not shown) which overlies the shaft 2.

The locking mechanism 4 is disposed in a position spaced from an end 6 of the steering shaft 2 at which a steering wheel is to be fitted. The end 6 is provided with splines 8 by means of which the steering wheel is fitted in a conventional manner.

The locking mechanism 4 comprises a collar 10 on the steering shaft 2. This may be unitarily formed with the steering shaft 2, or secured to the steering shaft 2. Disposed axially adjacent the collar 10 is a locking element in the form of a sleeve 12 which is disposed about the shaft 2. One end of a helical spring 14 is disposed about the shaft 2 and abuts the sleeve 12. The other end of the spring 14 is axially constrained, conveniently against the inner race of a static bearing 15 for the shaft 2, so that the spring 14 can rotate with the shaft 2. This spring 14 urges the sleeve 12 towards the collar 10. The adjacent mating end surfaces of the collar 10 and the sleeve 12, numbered 11 and 13, are each formed with teeth 16 which intermesh. By means of these teeth 16 urged into meshing engagement by the spring 14 torque can be transmitted from the collar 10 to the sleeve 12. Particularly preferred embodiments employ 8 or 12 teeth. The sleeve 12 is formed with a plurality of longitudinally extending slots 17 at a number of locations arranged about the sleeve 12. The illustrated steering column lock has four such slots.

A latching device is disposed adjacent the shaft 2, and illustrated schematically by item 18. This latching device is of conventional structure, as is commonly found in steering column locks, and includes a spring-biased locking bolt 19 movable in a guide (not shown) located in the housing so as to be movable radially towards and away from the shaft 2, and an actuating mechanism. This mechanism provides that when a vehicle operating key is removed from the ignition the bolt 19 is biased towards the shaft 2. Insertion of the key into the ignition allows for retraction of the bolt 19 when the steering shaft 2 is rotated. The device also preferably includes secondary means in the form of an internal lateral side bolt serving as a backup device to stop the main bolt 19 from accidentally engaging the shaft 2 during vehicle operation.

The operation of the locking mechanism is now described. Figure 1 shows the mechanism in an unlocked condition in which the bolt 19 is in a retracted position. In this condition, rotation of the shaft 2 (and the collar 10) causes rotation of the sleeve 12 through the intermeshed teeth 16 which are urged against each other by the axial force of the spring 14. The sleeve 12 and spring 14 thereby rotate in unison with the shaft 2 and exert no restrictive force against rotation of the shaft 2.

Retraction of the vehicle operating key from the vehicle ignition effects biasing of the bolt 19 towards the sleeve 12. Once the bolt 19 is aligned with a slot 17 in the sleeve 12 (which may require some rotation of the steering wheel) the leading end of the bolt 19 will snap into a slot 17. In this condition the shaft 2 is locked.

In this locked condition, the sleeve 12 is prevented from rotation by means of the bolt 19. Rotation of the steering wheel of the vehicle by application of a low torque is also prevented, owing to the fact that the teeth 13 of the collar 10 are forced into meshing engagement with the teeth 11 of the sleeve 12. Application of a larger torque which is sufficient to overcome the force of the spring 14 allows the collar 10 to rotate over the sleeve 12, the teeth 13 of the collar 10 camming over the intermeshed teeth 11 of the sleeve 12, so that the sleeve 12 moves away from the collar 10 against the action of the spring 14. As the teeth 11, 13 move over each other from a fully meshed condition, the turning of the steering wheel in a given direction is thereby restricted by the spring 14 until the relative position as shown in Figure 2 is reached in which the teeth 11, 13 are almost opposed, and after which further rotation in the same direction is then assisted by the spring force. As a result, the steering wheel and shaft 2 will snap or jump between relative orientations in which there is fully meshing engagement. Although the steering wheel and shaft 2 can thus be rotated, only erratic rotation is possible. The smooth rotation of the steering wheel and shaft 2 required for normal vehicle steering is impossible.

The result of this is that there is a maximum limit to the torque which can be transmitted from the steering shaft 2 to the sleeve 12 and onto the bolt 19. Above this torque, the shaft 2 can be rotated in the erratic manner described. Thus, the locking mechanism cannot be destroyed by application of an excessive torque to the steering wheel. Appropriate choice of the spring constant for the spring 14, the angle and depth of the teeth 16 and the surface characteristics thereof allow for selection of an appropriate value for this maximum torque. This should be arranged to be sufficiently low that a force which could damage the bolt 19 cannot be applied thereto and yet is sufficiently high so that the erratic rotation of the steering wheel is ensured. A particularly useful limit at which the shaft 2 is able to move relative to the sleeve 12 is about 45 Nm.

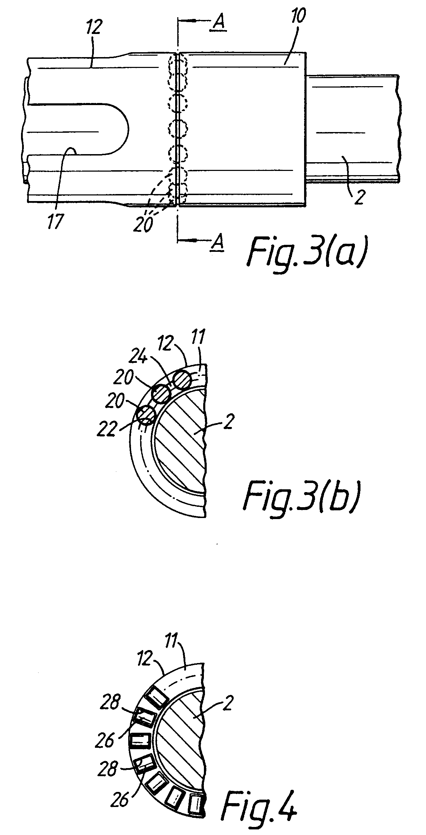

A first embodiment of the present invention, which is substantially identical to the steering column lock of Figure 1, except for the structure of the drive means provided between the sleeve 12 and the collar 10, is illustrated in Figures 3(a) and (b). Figure 3(a) is a side view in the region of the connection between the sleeve 12 and the collar 10, whilst Figure 3(b) is a part view looking end on at the sleeve 12 along the line A-A of Figure 3(a). Instead of the intermeshed teeth 16, there are provided a plurality of balls 20 (of which only three are shown in Figure 3(b)) seated in respective part-spherical seats 22 formed at the opposed mating end surfaces 11, 13 of the sleeve 12 and the collar 10. This arrangement also provides intermeshed cam surfaces, defined by the balls 20 and the seats 22. Similarly, the collar 10 can move over the sleeve 12 on application of a torque sufficient to effect the requisite axial movement of the sleeve 12 against the action of the spring 14 (and frictional forces). It is preferable in this case that one or both of the mating end surfaces 11, 13 of the sleeve 12 and the collar 10 have guiding channels 24 which may be of part-circular cross-section which connect the ball seats 22 and which assist in guiding the relative movement between the balls 20 and adjacent ball seats 22. As a further modification the balls 20 could be constrained in one or other of the sleeve 12 or the collar 10 in a ball cage such as is found in a bearing raceway.

In a further embodiment of the present invention, which is substantially identical to the steering column lock of Figure 1, except as to the form of the drive means between the collar 10 and the sleeve 12, instead of intermeshed teeth 16, there are provided as seen in Figure 4, which is a part view looking end on at the surface 11 of the sleeve 12, a plurality of cylindrical rollers 26 radially disposed with respect to the shaft 2. These are seated in respective part-cylindrical recesses 28 in the opposed end surfaces 11, 13 of the collar 10 and the sleeve 12. These rollers 26 and seats 28 define the cam surfaces and allow the collar 10 to move over the sleeve 12 (when the mechanism is locked) on application of a torque sufficiently high to overcome the counterforce of the spring 14 (and camming friction).

## Claims

1. A steering column lock, comprising:
a steering shaft (2) having a collar portion (10);
a sleeve (12) disposed about said shaft (2) and arranged to be engageable with said shaft (2) for rotation therewith through drive means;
a latch device movable between a locked position in which said sleeve (12) is engaged so as to be prevented from being rotated with said shaft (2), and an unlocked position in which said sleeve (12) is not so engaged;
wherein said drive means comprise intermeshing camming surfaces (11, 13) formed on said sleeve (12) and on said shaft (2), and resilient means (14) to urge said intermeshing camming surfaces (11, 13) into engagement with each other, whereby, when said latch device is in the locked position, on application of a torque exceeding a predetermined value said intermeshing camming surfaces (11, 13) cam over each other against the force of said resilient means (14);
characterized in that said intermeshing camming surfaces (11, 13) comprise a plurality of balls (20) or radially disposed cylindrical rollers (26) seated in respective seats (22, 28), each formed in part at an end surface of said sleeve (12) and in a surface of said collar portion (10) which faces said end surface of said sleeve (12).

2. A steering column lock according to claim 1, wherein said intermeshing camming surfaces (11, 13) provide a plurality of angularly spaced relative positions in which they are fully meshed, whereby, on application of a torque exceeding the predetermined value said shaft (2) jumps between the spaced fully meshed positions.

3. A steering column lock according to claim 1 or 2, wherein said sleeve (12) is formed with one or more slots (17) therein, and said latch device includes a locking bolt (19) extendable in the locking position into a slot (17), and retracted from said slot (17) in the unlocked position.

4. A steering column lock according to any one of claims 1 to 3, wherein said resilient means (14) comprises a spring disposed about said shaft (2), a first end of which axially abuts said sleeve (12), and the opposite end of which abuts a bearing for said shaft (2).

5. A steering column lock according to any one of claims 1 to 4, wherein said resilient means (14) and intermeshing camming surfaces (11, 13) are arranged so that when said latch device is in the locking position disengagement between said shaft (2) and said sleeve (12) occurs at above a torque of about 45 Nm.

## Patentansprüche

1. Lenksäulenschloß, ausgestattet mit
- einer Lenkwelle (2) mit einem Wellenbundteil (10);
- einer Buchse (12), die um die Welle (2) so angeordnet ist, daß sie sich mit dieser Welle (2) in Eingriff bringen und somit über Antriebsmittel mit dieser in eine Drehung versetzen läßt;
- einer Rastvorrichtung, die zwischen einer Verriegelungsstellung, in der ein Eingriff mit der Buchse (12) besteht und letztere damit an der Drehung mit der Welle (2) gehindert wird, und einer Entriegelungsstellung, in der kein derartiger Eingriff mit der Buchse (12) besteht, beweglich ist;
wobei das Antriebsmittel mehrere ineinandergreifende Mitnehmerflächen (11,13), die an der Buchse (12) sowie der Welle (2) ausgebildet sind, sowie zudem federelastische Mittel (14) umfaßt, die diese ineinandergreifenden Mitnehmerflächen (11, 13) miteinander so in Eingriff halten, daß die ineinandergreifenden Mitnehmerflächen (11, 13), wenn sich die vorgenannte Rastvorrichtung in ihrer Verriegelungsstellung befindet, bei Beaufschlagung mit einem Drehmoment, das einen vorbestimmten Wert überschreitet, entgegen der Kraft dieses federstischen Mittels (14) übereinander wegzugleiten beginnen, **dadurch gekennzeichnet**, **daß** die ineinandergreifenden Mitnehmerflächen (11,13) mehrere Kugeln (20) oder radial angeordnete Zylinderrollen (26) umfassen, die in entsprechenden Sitzen (22,28) gelagert sind, welche jeweils teilweise in einer Endfläche der Buchse (12) sowie in einer dieser Endfläche der Buchse (12) gegenüberliegenden Fläche des Wellenbundteils (10) angeordnet sind.

2. Lenksäulenschloß gemäß Anspruch 1, wobei die ineinandergreifenden Mitnehmerflächen (11, 13) mehrere im Winkel zueinander beabstandete Stellungen definieren, in denen sich die Mitnehmerflächen völlig miteinander im Eingriff befinden, und die Welle (2) bei Beaufschlagung mit einem Drehmoment, das den vorbestimmten Wert überschreitet, zwischen diesen im Winkel zueinander beabstandeten Stellungen, in denen dieser vollständige Eingriff besteht, durchzurutschen beginnt.

3. Lenksäulenschloß gemäß Anspruch 1 oder 2, wobei die Buchse (12) einen oder mehrere Schlitz(e) (17) aufweist und die genannte Rastvorrichtung einen Riegel (19) umfaßt, der sich in VerriegelungsStellung in einen Schlitz (17) hineinbewegen läßt, jedoch in Entriegelungsstellung aus diesem Schlitz herausgezogen ist.

4. Lenksäulenschloß gemäß einem der Ansprüche 1 - 3, wobei das federelastische Mittel (14) eine um die Welle (2) angeordnete Feder umfaßt, die mit einem Ende axial an der Buchse (12) und mit ihrem gegenüberliegenden Ende an einem die Welle (2) führenden Lager anliegt.

5. Lenksäulenschloß gemäß einem der Ansprüche 1 - 4, wobei das federelastische Mittel (14) sowie die ineinandergreifenden Mitnehmerflächen (11, 13) so angeordnet sind, daß die Trennung des Kraftschlusses zwischen der Welle (2) und der Buchse (12) bei einem Drehmoment von mehr als ca. 45 Nm erfolgt, wenn sich die Rastvorrichtung ihn ihrer Verriegelungsstellung befindet.

## Revendications

1. Système de blocage pour une colonne de direction, comprenant :
un arbre de direction (2) comportant une partie en forme de bague (10) ;
un manchon (12) disposé autour dudit arbre (2) et aménagé de manière à pouvoir être engagé sur ledit arbre (2) pour tourner avec lui par l'intermédiaire de moyens de commande ;
un dispositif de verrou pouvant se déplacer entre une position de blocage dans laquelle ledit manchon (12) est engagé de manière à être empêché d'être entraîné en rotation avec ledit arbre (2) et une position de déblocage dans laquelle ledit manchon (12) n'est pas engagé de cette manière;
dans lequel lesdits moyens de commande comprennent des surfaces formant came à engagement mutuel (11, 13) formées sur ledit manchon (12) et ledit arbre (2) et des moyens élastiques (14) destinés à pousser lesdites surfaces formant came à engagement mutuel (11, 13) à s'engager l'une avec l'autre, lesdites surfaces formant came à engagement mutuel (11, 13) se mettant en prise l'une sur l'autre à l'encontre de la force desdits moyens élastiques (14), quand ledit dispositif de verrou est dans la position de blocage, par application d'un couple dépassant une valeur prédéterminée ;
caractérisé en ce que lesdites surfaces formant came à engagement mutuel (11, 13) comprennent une pluralité de billes (20) ou de rouleaux cylindriques (26) disposés radialement qui sont en appui sur des sièges respectifs (22, 28) qui sont formés chacun, en partie, à une surface d'extrémité dudit manchon (12) et dans une surface de ladite partie en forme de bague (10) qui fait face à ladite surface d'extrémité dudit manchon (12).

2. Système de blocage pour une colonne de direction selon la revendication 1,.dans lequel lesdites surfaces formant came à engagement mutuel (11, 13) présentent une pluralité de positions relatives angulairement espacées dans lesquelles elles sont totalement engagées, ledit arbre (2) sautant entre les positions totalement engagées lors de l'application d'un couple dépassant la valeur prédéterminée.

3. Système de blocage pour une colonne de direction selon la revendication 1 ou 2, dans lequel ledit manchon (12) est conformé avec une ou plusieurs encoches (17) dans sa partie intérieure et ledit dispositif de verrou comprend un loquet de blocage (19) qui peut s'étendre, dans la position de blocage, dans une encoche (17) et être retiré de ladite encoche (17) dans la position de déblocage.

4. Système de blocage pour une colonne de direction selon l'une quelconque des revendications 1 à 3, dans lequel lesdits moyens élastiques (14) comprennent un ressort disposé autour dudit arbre (2) dont une première extrémité est en butée axialement sur ledit manchon (12) et dont l'extrémité opposée est en butée sur un coussinet destiné audit arbre (2).

5. Système de blocage pour une colonne de direction selon l'une quelconque des revendications 1 à 4, dans lequel lesdits moyens élastiques (14) et lesdites surfaces formant came à engagement mutuel (11, 13) sont aménagés de telle manière que, quand ledit dispositif de verrou est dans la position de blocage, le désengagement entre ledit arbre (2) et ledit manchon (12) se produit pour une valeur de couple supérieure à environ 45 Nm.
